# EUROPÄISCHE PATENTSCHRIFT

(11) **EP 2 920 577 B1**
(45) Veröffentlichungstag und Bekanntmachung des Hinweises auf die Patenterteilung: **09.08.2017**
(21) Anmeldenummer: 13789707.0
(22) Anmeldetag: 29.10.2013
(51) Int. Cl.: G01N 21/64, G02B 21/36

(54) **VORRICHTUNG UND VERFAHREN ZUR MIKROSKOPIE EINER VIELZAHL VON PROBEN**
DEVICE AND METHOD FOR MICROSCOPY ON A PLURALITY OF SAMPLES
DISPOSITIF ET PROCÉDÉ POUR LA MICROSCOPIE D'UNE PLURALITÉ D'ÉCHANTILLONS

(30) Priorität: 19.11.2012 DE 102012022603
(43) Veröffentlichungstag der Anmeldung: 23.09.2015
(73) Patentinhaber: Karlsruher Institut für Technologie (KIT), 76131 Karlsruhe (DE); Acquifer AG, 76135 Karlsruhe (DE)
(72) Erfinder: LIEBEL, Urban, 69234 Dielheim-Horrenberg (DE); GEHRIG, Jochen, 76761 Rülzheim (DE)
(74) Vertreter: Müller-Boré & Partner Patentanwälte PartG mbB
(86) Internationale Anmeldenummer: PCT/EP2013/003252
(87) Internationale Veröffentlichungsnummer: WO 2014/075764

(56) Entgegenhaltungen:
- WO-A1-2006/097123
- US-A1- 2008 206 774
- US-A1- 2010 309 306
- US-A1- 2010 310 139

## Beschreibung

Der vorliegende Anmeldegegenstand bezieht sich auf eine Vorrichtung zur Mikroskopie einer Vielzahl von Proben sowie ein Verfahren zur Mikroskopie einer Vielzahl von Proben.

Bei einem beträchtlichen Teil aller der heutzutage verwendeten Mikroskope ist es erforderlich eine Probe zu bewegen, um diese untersuchen zu können. Eine Probe kann insbesondere biologlisches oder nicht-biologisches Material umfassen. Unter biologischem Material können insbesondere lebende oder tote Organismen verstanden werden. Weiterhin kann unter biologischem Material bzw. biologischen Proben Gewebe-, Zell- oder Fasermaterial verstanden werden, welches menschlicher, tierischer oder pflanzlicher Herkunft ist. Nicht-biologisches Material kann beispielsweise eine Gesteinsprobe oder ein Stück Metall sein.

Häufig wird eine Probe mittels automatischer Systeme unter einem Objektiv eines Mikroskops positioniert, so dass die Probe untersucht werden kann. Insbesondere werden biologische Proben häufig in sog. Mikrotiterplatten positioniert. Mikrotiterplatten sind Standardgefäße für (insbesondere biologische) Proben. Wie weisen meist zwischen etwa 12 und etwa 1536 Vertiefungen/ Aufbewahrungspositionen auf, in denen Zellen, biologische Proben oder anderes Material vor allem zur optischen Untersuchung aufbewahrt werden. Die Mikrotiterplatte wird in ein automatisches System eingelegt oder eingespannt. Das automatische System ist dabei derart ausgestaltet, dass die Mikrotiterplatte unter bzw. vor dem Objektiv verfahrbar/verschiebar ist, so dass jede Probe, die in der Mikrotiterplatte angeordnet ist, für eine Untersuchung mittels des Objektivs positioniert werden kann. Damit kann jede Probe in bzw. auf einer Mikrotiterplatte nacheinander zur Untersuchung mittels des Mikroskops positioniert werden bis alle Proben bzw. Aufbewahrungspositionen untersucht bzw. fotografiert wurden.

Typischerweise erlauben solche automatischen Systeme bzw. automatische Aufnahmevorrichtungen, die Mikrotiterplatte in einem 2-dimensionalen Bereich zu verfahren. Beispielsweise kann eine Mikrotiterplatte in einem Bereich von 120mm x 80mm verfahren werden. In anderen Worten kann eine Mikrotiterplatte in einem kartesischen Arbeitsbereich bewegt bzw. verfahren werden. Weist die Mikrotiterplatte beispielsweise ebenfalls eine Größe von 120mm x 80mm auf, kann jeder Bereich der Mikrotiterplatte mittels des Mikroskops untersucht werden bzw. in den Bereich der optischen Achse des Objektivs des Mikroskops gebracht werden. In anderen Worten kann die Mikrotiterplatte in eine X-Richtung und/oder eine Y-Richtung verfahren werden, um einen bestimmten Bereich der Mikrotiterplatte bzw. eine bestimmte Probe auf der Miktrotiterplatte zu untersuchen.

Ein wichtiger Aspekt in der Mikroskopie bzw. in der Untersuchung von Proben ist die Detailaufnahme spezieller Strukturen bzw. Bereiche einer Probe. Dafür können unterschiedliche Autofokussysteme verwendet werden, welche vor der Aufnahme bzw. Fotografie eine gewisse Zeit benötigen, um die Probe in die "richtige" Z-Position (Fokussierung) zu bringen. In anderen Worten ist es für eine Fokussierung erforderlich, dass der Abstand zwischen Probe und Objektiv entlang der optischen Achse des Objektivs der Kamera/des Mikroskops derart eingestellt wird, dass die zu untersuchenden Strukturen möglichst klar und deutlich erkennbar sind.

Moderne Mikroskope können während des Fokussierens oder kurz danach "interessante Strukturen" erkennen. Hierdurch ist es möglich, die Probe nicht nur zu Fokussieren sondern auch die Probe zu verschieben bzw. um zu positionieren, so dass die "interessante Struktur" in der Bildmitte eines aufzunehmenden Bildes gerückt bzw. positioniert wird, falls diese sich ansonsten in einem Randbereich einer Aufnahme befunden hätte.

Viele Proben müssen für eine mikroskopische Untersuchung präpariert werden. Dabei ist es oft wünschenswert, dass Proben bereits innerhalb sehr kurzer Zeit nach deren Präparation untersucht werden, um unerwünschte Veränderungen der Proben bis zur Untersuchung so gering wie möglich zu halten.

Beispielsweise ist es bei lebenden biologischen Proben wichtig, dass eine Untersuchung schnell durchgeführt werden kann, da es möglich ist, dass die Probe wie ein lebender Organismus sich innerhalb der Aufbewahrungsposition oder sogar zwischen einzelnen Aufbewahrungsposition innerhalb der Mikrotiterplatte bewegt und so immer wieder neu "angefahren" werden muss damit eine vollständige Untersuchung möglich ist, weil der Bildbereich des Mikroskops/der Kamera häufig kleiner ist als die gesamte Probe. Weiterhin wäre es möglich, dass eine Probe nur durch ihre Position in der Mikrotiterplatte identifizierbar ist. Entsprechend ist eine Probe, die sich aus ihrer Position/ Aufbewahrungsposition in der Mikrotiterplatte herausbewegt, nur noch schlecht oder nicht mehr identifizierbar. Diese Problematik ist insbesondere denkbar, wenn die einzelnen Proben nicht in einer Mikrotiterplatte, sondern in einer Petrischale oder ähnlichem angeordnet sind, in welcher sich die einzelnen Proben (frei)-bewegen können.

Weiterhin ist meist nur ein bestimmter kleiner Teil der Probe für eine Untersuchung entscheidend, so dass es nicht ausreicht, dass ein beliebiger Teil einer Probe aufgenommen/fotographiert wird. Vielmehr muss ein spezieller Bereich/Teil der Probe untersucht werden, um verwertbare Informationen bzw. Erkenntnisse sammeln zu können.

Auch ist es möglich, dass eine Probe nur für eine begrenzte Zeit überhaupt untersuchbar ist. In anderen Worten kann es vorkommen, dass Eigenschaften bzw. "Besonderheiten" einer Probe nur eine begrenzte Zeit erkennbar sind. Beispielsweise können nach einem bestimmten Zeitraum bzw. Lebensdauer der Probe bestimmte Reaktionen nicht mehr untersuchbar bzw. nachprüfbar sein. Daher ist die Gesamtzahl der zu untersuchenden Proben die auf einer Mikrotiterplatte positioniert und nacheinander untersucht werden, wesentlich von der Art der Probe sowie der Art der Untersuchung abhängig. Durch diese Maßgaben wird jedoch die Zahl der "untersuchbaren" Proben auf einer Mikrotiterplatte begrenzt, wodurch sich der Aufwand zur Untersuchung einer Vielzahl von Proben erhöht, da häufiger ein Auswechseln von Mirkotiterplatten und ein Neujustieren des Mikroskops bzw. der jeweiligen Mirkotiterplatte zum Mikroskop erforderlich wird.

Falls Experimente durchgeführt werden, bei denen sich die Probe verändert bzw. mit anderen Substanzen reagiert, sollten Untersuchungen dieser Probe möglichst zeitnah durchgeführt werden. Um wissenschaftlich belastbare Ergebnisse erzielen zu können, ist es auch hier häufig erforderlich die Experimente bei einer Vielzahl von Proben vorzunehmen, um Vergleichswerte hinsichtlich deren Veränderungen untersuchen zu können. Entsprechend ist es erforderlich, dass die Probe nach Zugabe einer Substanz etc. möglichst zeitnah untersucht wird. Analoges ist zutreffend, wenn eine Versuchsreihe durchzuführen ist, und möglichst viele Proben unter gleichen Voraussetzungen bzw. Versuchsbedingungen untersucht werden sollen.

US 2010/310139 A1 offenbart eine Vorrichtung und eine Methode zur Detektion von Fluoreszenz einer biologischen Probe, ohne dabei die Probe aus dem Beobachtungsfeld zu verlieren. Die Vorrichtung umfasst dabei eine Makro-Bildaufnahme-Einheit, welche ein Makro-Bild eines Ausschnitts aufnimmt, in dem sich eine biologische Probe befindet. Hierfür wird eine Lichtquelle verwendet, dessen Licht durch die Probe transmittiert, von einem Mikroskopobjektiv aufgefangen und von einer CCD Kamera detektiert wird. Zusätzlich umfasst das System eine Mikro-Bildaufnahme-Einheit, welche einen Laserstrahl durch das Objektiv auf die zu untersuchende Probe fokussiert und einen Teil des Bildausschnitts durch steuerbare Spiegel in X- und Y-Richtung abrastert. Die Laserstrahlung regt die biologische Probe in dem abgerasterten Bereich punktweise zur Fluoreszenz an, welche anschließend mittels einer Photomultiplier-Röhre detektiert wird. Der Bildausschnitt, in dem ein Mikro-Bild delektiert werden soll, wird dabei anhand des Makro-Bildes bestimmt.

WO 2006/097123 A1 offenbart ein Mikroskopsystem mit zumindest einer Linse und einem Probenhalter, welcher in zwei Richtungen bewegbar ist. Ferner weist das Mikroskopsystem einen Entfernungsmesser auf, um Entfernungen zwischen einem Bezugspunkt und einer Mehrzahl von Punkten auf einer ersten Oberfläche des Probenhalters zu messen. Das Mikroskopsystem umfasst einen Speicher, um die Mehrzahl von Entfernungen zu speichern und eine Kontrolleinheit, um die zumindest eine Linse an eine Mehrzahl von Fokussierungspositionen zu positionieren. In einer bevorzugten Ausführungsform weist das Mikroskopsystem einen Linsenturm auf, in welchem der Entfernungsmesser und zumindest eine Linse angebracht sind. Um die Linse anstatt des Entfernungsmessers zu nutzen, kann der Linsenturm um eine Achse rotiert werden, um anstatt des Entfernungsmessers die Linse in Position zu bringen. Darüber hinaus kann das Mikroskopsystem gemäß einer bevorzugten Ausführungsform weitere Linsen aufweisen, um nach dem Vermessen aller Proben mit der ersten Linse eine oder mehrere Proben mit einer größeren Vergrößerung zu betrachten, wobei die Fokussierungsdistanz wiederum verwendet werden kann. Weiterer Stand der Technik ist aus US2008206774 und US2009046192 bekannt.

Es ist daher Aufgabe der vorliegenden Erfindung, eine Vorrichtung und ein Verfahren bereitzustellen, mittels welcher eine Vielzahl von Proben zeitnah nacheinander untersucht werden können. In anderen Worten ist es eine Aufgabe, eine Vorrichtung sowie ein Verfahren bereitzustellen, welche ermöglichen den Zeitaufwand des Mikroskopierens bei einer Vielzahl von Proben im Vergleich zu bekannten Vorrichtungen und Verfahren zu minimieren.

Erfindungsgemäß wird diese Aufgabe durch die Merkmale der unabhängigen Ansprüche gelöst. Bevorzugte Ausführungsformen der Erfindung sind Gegenstand der abhängigen Ansprüche.

Ein Aspekt der vorliegenden Erfindung betrifft eine Vorrichtung zur Mikroskopie einer Vielzahl von Proben, welche an einer Vielzahl von Messpositionen angeordnet sind. Die erfindungsgemäße Vorrichtung umfasst einen ersten optischen Detektor, welcher ausgelegt ist, nacheinander eine Vielzahl von Messpositionen in Bezug auf eine Probenhalterung einzunehmen und an jeder Messposition erste Bilddaten einer Probe (der jeweiligen Messposition) mit einer ersten räumlichen Auflösung zu erfassen. Dazu ist die Vorrichtung insbesondere ausgelegt, den ersten optischen Detektor bzw. die Probenhalterung derart anzusteuern, dass der erste optische Detektor nacheinander die Vielzahl von Messpositionen relativ zur Probenhalterung einnimmt. Hierfür wird beim Übergang von einer Messposition zur nächsten Messposition der erste optische Detektor relativ zur Probenhalterung bzw. die Probenhalterung relativ zum ersten optischen Detektor bewegt. Vorzugsweise verbleibt der erste optische Detektor jeweils während des Erfassens der ersten Bilddaten relativ zur Probenhalterung im Wesentlichen in Ruhe, während eine Relativbewegung lediglich zwischen den Bilderfassungsvorgängen erfolgt. In einer besonders bevorzugten Ausführungsform wird für die Relativbewegung lediglich der erste optische Detektor, nicht aber die Probenhalterung beschleunigt und wieder abgebremst, während die Probenhalterung in Ruhe bleibt. Dadurch beeinflusst der Messprozess die durch die Probenhalterung gehaltenen Proben möglichst wenig.

Besonders bevorzugt weist die erfindungsgemäße Vorrichtung eine Steuereinrichtung auf, welche die Vielzahl von Messpositionen vorzugsweise in einer festen oder einstellbar veränderlichen, rasterartigen Anordnung festlegt. Vorzugsweise ist in der Steuereinrichtung eine Vielzahl von vorgegebenen Anordnungen der Vielzahl von Messpositionen hinterlegt. Beispielsweise kann jede Messposition der Vorrichtung (insbesondere des ersten optischen Detektors) einem Probenbehältnis (z.B. Vertiefung) in einer Mikrotiterplatte entsprechen. Die Anordnung der Messpositionen entspricht dann der Anordnung von Probenbehältnissen in der Mikrotiterplatte. Dabei kann für jede einer Vielzahl von standadisierten oder üblichen Mikrotiterplatten jeweils eine Anordnung (und vorzugsweise auch eine Reihenfolge) von Messpositionen in der Steuereinrichtung hinterlegt (gespeichert) sein.

Legt dann beispielsweise ein Benutzer eine mit Proben bestückte Mikrotiterplatte in die Probenhalterung ein, kann er die entsprechende Vorgabe für die Anordnung und/oder Reihenfolge der Messpositionen auswählen. Die Steuereinrichtung steuert dann vorzugsweise automatisch den ersten optischen Detektor derart, dass er nacheinander die Vielzahl von Messpositionen (Proben) gemäß der vorgegebenen bzw. ausgewählten Anordnung und/oder Reihenfolge anfährt. Alternativ oder zusätzlich zu einer manuellen Auswahl einer vorgegebenen Anordnung von Messpositionen kann die Vorrichtung auch ausgelegt sein, die einer benutzten Mikrotiterplatte entsprechende Anordnung von Messpositionen automatisch zu erkennen und auszuwählen.

Alternativ oder zusätzlich zur Vorgabe fester Anordnungen von Messpositionen in der Steuereinrichtung, kann die Vorrichtung auch für eine freie oder eine parametrisierte Festlegung der Anordnung und/oder Reihenfolge der Messpositionen ausgelegt sein. So kann beispielsweise ein Muster von Messpositionen in Form eines Raster, insbesondere in regelmäßigen bzw. gleichen Abständen von Messpositionen (z.B. Rechtecksgitter) vorgegeben sein, dessen Rastermaß (z.B. Abstände benachbarter Messpositionen entlang von Reihen und/oder Spalten) vom Benutzer vorzugsweise frei vorgegeben werden kann.

Außerdem umfasst die erfindungsgemäße Vorrichtung eine Bilddatenauswerteeinrichtung, die ausgelegt ist, für jede Probe bzw. Messposition (jeweils) einen innerhalb der jeweiligen ersten Bilddaten dargestellten, zu untersuchenden Bereich der Probe (der jeweiligen Messposition) festzulegen. Dieser zu untersuchende Bereich wird im Folgenden gelegentlich auch als "interessanter" Bereich der Probe bezeichnet. Es handelt sich dabei insbesondere um einen Ausschnitt der ersten Bilddaten, der genauer (insbesondere vergrößert und/oder mit höherer Auflösung und/oder in seiner Dynamik, also zeitaufgelöst und/oder in einem speziellen optischen Spektralbereich) untersucht werden soll. Beispielsweise könnte es sich bei der Probe um eine Zellkultur handeln, innerhalb derer eine einzelne Zelle oder eine Zellgruppe oder eine Zellstruktur aufgefunden und genauer untersucht werden soll. Auch in Gewebeuntersuchungen könnten bestimmte Gewebsstrukturen für die Untersuchung besonders interessant sein. In einer bevorzugten Ausführungsform ist die Bilddatenauswerteeinrichtung ausgelegt, den zu untersuchenden Bereich der Probe automatisch (insbesondere durch Mustererkennung) zu ermitteln.

Die erfindungsgemäße Vorrichtung umfasst außerdem einen zweiten optischen Detektor, welcher derart (direkt oder indirekt mechanisch oder durch eine entsprechende Ansteuerung) an den ersten optischen Detektor gekoppelt ist, dass er nacheinander eine Vielzahl von Messpositionen, insbesondere die jeweiligen Messpositionen, einnimmt, die zeitlich (unmittelbar oder mittelbar) vorher der erste optische Detektor bereits eingenommen hatte. In anderen Worten ausgedrück folgt der zweite optische Detektor dem ersten optischen Dektetor in dessen Messpositionen nach. Dabei ist der zweite optische Detektor ausgelegt, für jede Probe zweite Bilddaten von dem zu untersuchenden Bereich der jeweiligen Probe bzw. der jeweiligen Messposition mit einer zweiten räumlichen Auflösung zu erfassen, die höher ist als die erste räumliche Auflösung. Der zweite optische Detektor folgt also gewissermaßen dem ersten optischen Detektor direkt oder indirekt nach und erfasst basierend auf den von der Bilddatenauswerteeinrichtung ermittelten Daten (insbesondere einer genauen Position innerhalb der ersten Bilddaten) des zu untersuchenden Bereichs die zweiten Bilddaten.

Die Vorrichtung zur Mikroskopie ist ein Mikroskop bzw. eine Mikroskopanordnung sein. Erfindungsgemäss ist die Vorrichtung eine Vorrichtung zur seriellen bzw. sequenziellen Mikroskopie einer Vielzahl von Proben.

Der erste optische Detektor ist vorzugsweise innerhalb eines ersten Detektorarbeitsraums (in Bezug auf die Probenhalterung bzw. die dadurch gehaltenen Proben) verfahrbar bzw. beweglich. Beispielsweise kann der erste Detektorarbeitsraum ein 1-, 2- oder 3-dimensionaler Raum sein. Dieser erste Detektorarbeitsraum kann beispielsweise mittels eines Koordinatensystems definiert sein, so dass eine bestimmte Position des ersten optischen Detektors einer bestimmten Koordinate im ersten Detektorarbeitsraum entspricht. Vorzugsweise ist das Koordinatensystem ein kartesisches Koordinatensystem, welches ermöglicht durch die Angaben von X- und Y-Koordinaten eine Position des ersten optischen Detektors innerhalb des ersten Detektorarbeitsraums zu definieren. In anderen Worten ist der erste optische Detektor in eine X- sowie eine Y-Richtung verfahrbar, wobei die X- und Y-Richtung vorzugsweise orthogonal zueinander sind und eine X-Y-Ebene aufspannen, welche insbesondere senkrecht zu einer optischen Achse des ersten optischen Detektors liegt.

Ist beispielsweise eine Vielzahl von Proben matrixartig (rasterartig) angeordnet, können diese Proben durch den ersten optischen Detektor untersucht/mikroskopiert werden, indem der erste optische Detektor der Reihe nach verschiedene X-Y-Koordinaten innerhalb des ersten Detektorarbeitsraums anfährt bzw. einnimmt, wobei jede Messposition einer X-Y-Koordinate oder eines Bereichs von X-Y-Kooridinaten entspricht, und jede Messpostition einer jeweiligen Probe oder einem Probenbehältnis zugeordnet ist. In Richtung der optischen Achse des ersten optischen Detektor werden die Proben vorzugsweise in einem Abstand zum ersten optischen Detektor angeordnet, der insbesondere übe eine Z-Koordinate festgelegt bzw. eingestellt werden kann. Hat der erste optische Detektor eine Messposition bezüglicher einer Probe eingenommen, liegt vorzugsweise ein Messmittelpunkt der Probe auf oder zumindest in der Nähe der optischen Achse des ersten optischen Detektors. Beispielsweise kann ein Mittelpunkt einer Aufbewahrungsposition/ Vertiefung einer Mikrotiterplatte, in welcher eine Probe angeordnet ist, als Messmittelpunkt der Probe definiert/festgelegt werden. In einer anderen Ausführungsform ist die Vielzahl von Proben nicht in einer Mikrotiterplatte angeordnet, sondern in einer Petrischale oder ähnliches. In diesem Fall kann die Petrischale - beispielsweise mittels eines (Koordinaten-) Gitters - in Unterbereiche/ Zellen eingeteilt werden, wobei jeder Unterbereich/Zelle einem bestimmten Koordinatenbereich entspricht. Jede(r) Unterbereich/Zelle entspricht dann einer Messposition des ersten optischen Detektors. Hierbei kann die X-Y-Koordinate in der Mitte des Koordinatenbereichs der Zelle als Messmittelpunkt einer Probe angesehen/definiert werden.

Vorzugsweise ist ein Koordinatenbereich einer Messposition (X₁; Y₁) einem Koordinatenbereich einer jeweiligen Probe (X₂;Y₂) zuordenbar. Vorzugsweise sind die Positionen der Proben mittels eines Probenraums definiert. Der Probenraum kann 1-, 2- oder 3-dimensional sein. Weiterhin kann der Probenraum ein kartesischer Raum sein, welcher durch orthogonale X-, Y- und Z-Achsen definiert ist. Bevorzugt sind die Proben im Wesentlichen in einer X-Y-Ebene angeordnet, wobei jede der Positionen durch Koordinaten definiert bzw. bestimmbar ist. In anderen Worten kann eine Position einer Probe im Probenraum durch eine Koordinate des Detektorarbeitsraums ausgedrückt werden.

Vorzugsweise sind die Proben und der erste optische Detektor in einer Z-Richtung, welche normal zur X-Y-Ebene angeordnet ist, voneinander beabstandet. Die X-Y-Ebene des Probenraums ist insbesondere parallel zur X-Y-Ebene des Detektorarbeitsraums.

Entsprechend ist jeder Probe der Vielzahl von Proben eine eindeutige X-Y-Koordinate zuordenbar, welche einer entsprechenden Messposition des ersten optischen Detektors entspricht.

Insbesondere kann vorgesehen sein, dass eine Probe an/auf einer bestimmten Position einer Vorrichtung zur Mikroskopie angeordnet wird und dort bis zum Abschluss einer Mikroskopie/Untersuchung verbleibt. In anderen Worten kann vorgesehen sein, dass eine Probe bzw. die Vielzahl von Proben während der Mikroskopie/Untersuchung nicht bewegt wird. Bei einer Vielzahl von Proben kann für jede Probe eine jeweilige Position/Messposition vorgesehen sein, an welche die entsprechende Probe angeordnet wird. Beispielsweise kann eine Vielzahl von Proben auf einer oder mehreren Mikrotiterplatten oder ähnlichem positioniert sein, wobei diese Mikrotiterplatte(n) auf/an eine Probenhalterung der Vorrichtung zur Mikroskopie angeordnet werden können. Durch die Probenhalterung ist die jeweilige Messposition/Koordinate einer Probe festgelegt.

In einem bevorzugten Ausführungsbeispiel kann eine Probenhalterung verschiebbar bzw. verfahrbar sein, so dass eine Position einer Probe an/auf der Vorrichtung veränderlich ist. Vorzugsweise kann vorgesehen sein, dass eine Position einer Probe nur vor oder nach einer Mikroskopie einer Vielzahl von Proben verändert wird.

Gemäß einer weiteren Ausgestaltung kann der erste optische Detektor während einer Mikroskopie ortsfest verbleiben, während die Proben nacheinander an dem optischen Detektor positioniert werden, damit erste Bilddaten erfasst werden können. In diesem Fall ist eine Messposition als eine Position bzw. Reihenfolgennummer einer Probe zu verstehen, die erlaubt eine Probe zu identifizieren bzw. die Bilddaten einer Probe zuzuordnen. Beispielsweise kann in einer matrixartigen Anordnung der Vielzahl von Proben eine Angabe der Zeile/Spalte einer Probe als deren Messposition angesehen werden.

Insbesondere kann ein erster optischer Detektor eine Foto- und/oder eine Videokamera und/oder eine digitale Datenverarbeitung umfassen. Der erste optische Detektor ist insbesondere ausgelegt, um an jeder Messposition erste Bilddaten einer Probe zu erfassen. Erste Bilddaten können eine Aufnahme bzw. Fotografie und/oder eine Videoaufnahme umfassen. Der erste optische Detektor umfasst ein oder mehrere Objektive, so dass probenabhängig ein entsprechendes Objektiv gewählt werden kann, welches bei einem Erfassen von ersten Bilddaten verwendet werden soll. Vorzugsweise sind Objektiv und Kamera modular verwendbar. In anderen Worten ist das Objektiv lösbar mit der Kamera verbunden, so dass Kamera bzw. Objektiv austauschbar sind.

Wird beispielsweise eine Petrischale oder ähnliches verwendet, die eine Vielzahl von Proben umfasst, umfassen die ersten Bilddaten einer Probe eine Darstellung entsprechend des Koordinatenbereichs bzw. den Unterbereich/die Zelle, die der Probe zugeordnet ist.

Insbesondere ist unter einer ersten räumlichen Auflösung ein Auflösungsvermögen zu verstehen, welches erlaubt, dass Strukturen bzw. Muster der jeweiligen Proben (ausreichend) erkennbar bzw. klar umrissen sind. Vorzugsweise weist die erste räumliche Auflösung ein Auflösungsvermögen auf, so dass die ersten Bilddaten von der Bilddatenauswerteeinrichtung ausgewertet bzw. analysiert werden können.

Die Bilddatenauswerteeinrichtung kann insbesondere eine Analysesoftware umfassen, welche ermöglicht Charakteristika bzw. bestimmte Strukturen einer Probe, die untersucht werden sollen, zu erkennen. Vorzugsweise kann die Bilddatenauswerteeinrichtung basierend auf einem Strukturvergleich einen zu untersuchenden Bereich einer Probe, für die erste Bilddaten erfasst wurden, festlegen. Vorzugsweise kann die Bilddatenauswerteeinrichtung Farbschematat von Proben erkennen und basierend auf diesen einen zu untersuchenden Bereich einer Probe festlegen bzw. definieren.

Beispielweise kann eine Probe ein bestimmtes Grundmuster (Grundstruktur) aufweisen. In diesem Fall kann die Bilddatenauswerteeinrichtung auswerten/ festlegen, in welchem Bereich der ersten Bilddaten der Probe dieses Grundmuster bzw. diese Grundstruktur aufzufinden ist. Hierdurch kann der Bereich der ersten Bilddaten, der dieses Grundmuster bzw. diese Grundstruktur enthält, als zu untersuchender Bereich der Probe bestimmt bzw. festgelegt werden.

Weiterhin können Proben einer Vielzahl von Proben ein bestimmtes Grundmuster aufweisen, wobei sich alle Proben in diesem Grundmuster ähneln bzw. gleichen. In diesem Fall kann die Bilddatenauswerteeinrichtung auswerten/ festlegen, in welchem Bereich der ersten Bilddaten der jeweiligen Proben dieses Grundmuster bzw. diese Grundstruktur aufzufinden ist, so dass der Bereich der ersten Bilddaten, der dieses Grundmuster bzw. diese Grundstruktur enthält, als zu untersuchender Bereich für jede Probe der Vielzahl von Proben bestimmt bzw. festgelegt wird.

Vorzugsweise kann die Bilddatenauswerteeinrichtung durch Auswerten der ersten Bilddaten für den zu untersuchenden Bereich eine Position bzw. einen Koordinatenbereich definieren bzw. identifizieren, welcher einer Position bzw. einem Koordinatenbereich der Probe in dem Probenraum bzw. Detektorarbeitsraum entspricht.

Vorzugsweise ist die Bilddatenauswerteeinrichtung derart ausgelegt, dass die Bilddatenauswerteeinrichtung verschiedene "interessante" Strukturen analysieren kann. Beispielsweise kann die Bilddatenauswerteeinrichtung eine Benutzerschnittstelle umfassen, mittels welcher Strukturdaten bzw. Daten zu Charakteristika eingegeben werden können, so dass die Bilddatenauswerteeinrichtung basierend auf einer solchen Eingabe Proben analysiert. Insbesondere kann die Bilddatenauswerteeinrichtung basierend auf Referenzproben bzw. Daten Proben analysieren. Beispielsweise kann die Bilddatenauswerteeinrichtung auf Vergleichs-Bilddaten von zu untersuchenden Bereichen zugreifen, und wenn Ähnlichkeiten bzw. Übereinstimmungen in bestimmten Mustern/Strukturen in einer Probe zu finden sind, wird dies als zu untersuchender Bereich bestimmt. Beispielsweise können mindestens 70% an übereinstimmenden Mustern zwischen Vergleichs-Bilddaten und einem Bereich der Probe als ausreichend definiert werden, damit ein zu untersuchender Bereich festgelegt wird/festlegbar ist. Die Höhe an Übereinstimmung kann beispielsweise variable einstellbar sein und von der Art der Probe bzw. der Untersuchung abhängen.

Der zweite optische Detektor kann basierend auf einem festgelegten zu untersuchenden Bereich der Probe zweite Bilddaten der Probe erfassen. Vorzugsweise erfasst der zweite optische Detektor ausschließlich Bilddaten von dem zu untersuchenden Bereich der Probe.

Vorzugsweise enthalten die zweiten Bilddaten alle "interessanten" Strukturen bzw. relevanten Elemente einer Probe, so dass eine Auswertung der Probe sofort und vollständig basierend auf den zweiten Bilddaten erfolgen kann. Vorzugsweise kann der zweite optische Detektor "direkt über" dem zu untersuchenden Bereich einer Probe positioniert werden, so dass ein Mittelpunkt des zu untersuchenden Bereichs auf der optischen Achse des zweiten optischen Detektors liegt.

Insbesondere ist die zweite räumliche Auflösung höher als die erste räumliche Auflösung. Unter dem Begriff "zweite räumliche Auflösung" ist ebenfalls ein Auflösungsvermögen des zweiten optischen Detektors zu verstehen, welches gewährleistet, dass Strukturen klar und deutlich erkennbar sind. Der zweite optische Detektor weist ein höheres Auflösungsvermögen als der erste optische Detektor auf, so dass eine Struktur eines zu untersuchenden Bereichs einer Probe genauer untersucht werden kann als dies mit der ersten räumlichen Auflösung des ersten optischen Detektors möglich ist. Insbesondere kann ein Auflösungsvermögen des zweiten optischen Detektors derart gewählt sein, dass eine umfassende Auswertung bzw. Analyse des zu untersuchenden Bereichs vorgenommen werden kann. Sollen beispielsweise Gewebeveränderungen in Nervengewebe untersucht werden, so ist die zweite räumliche Auflösung derart gewählt, dass sämtliche Gewebestrukturen in einer erforderlichen Deutlichkeit erkennbar sind.

Insbesondere kann der zweite optische Detektor eine Fotokamera und/oder eine Videokamera und/oder digitale Datenverarbeitung umfassen. Der zweite optische Detektor umfasst oder mehrere Objektive, so dass probenabhängig ein entsprechendes Objektiv gewählt werden kann, welches bei einem Erfassen von zweiten Bilddaten verwendet werden soll. Vorzugsweise sind Objektiv und Kamera (Kameramodul) modular verwendbar. In anderen Worten ist das Objektiv lösbar mit der Kamera (dem Kameramodul) verbunden, so dass Kamera bzw. Objektiv austauschbar sind. Der zweite optische Detektor ist an den ersten optischen Detektor gekoppelt, so dass der zweite optische Detektor den Bewegungen des ersten optischen Detektors folgt. In anderen Worten sind der erste und der zweite optische Detektor "hintereinander" gereiht. Entsprechend ist es damit möglich, dass der erste optische Detektor erste Bilddaten einer Probe an einer nächsten Messposition erfasst bzw. detektiert, während der zweite optische Detektor zweite Bilddaten einer Probe erfasst, für die der erste optische Detektor bereits erste Bilddaten erfasst hat. Der zweite optische Detektor folgt dem ersten optischen Detektor in dessen Messpositionen nach, so dass der zweite optische Detektor Messpositionen einnimmt, die zeitlich vorher der erste optische Detektor eingenommen hatte.

Insbesondere ist unter dem Begriff "nachfolgen" zu verstehen, dass der zweite optische Detektor von einer Messposition zur nächsten bewegt wird, wobei ebenfalls der erste optische Detektor bewegt wird. Ebenfalls kann unter dem Begriff "nachfolgen" verstanden werden, dass die Vielzahl von Proben nacheinander an den optischen Detektoren vorbeigeführt werden. In diesem Fall würden die Proben bewegt und die optischen Detektoren würden während einer Mikroskopie ortsfest verbleiben. In einer weiteren Ausgestaltung könnten Proben und Detektoren aufeinander zu und aneinander vorbei bewegt werden, so dass nach erfolgter Untersuchung von Proben die optischen Detektoren sowie die nachfolgenden Proben zügig an der nächsten Messposition positioniert werden. In anderen Worten werden die Proben und die optischen Detektoren bewegt.

Die Vorrichtung zur Mikroskopie kann insbesondere ausgestaltet sein, dass einstellbar ist, ob sich die Vielzahl der Proben oder die optischen Detektoren oder beide, nämlich die optischen Detektoren und die Vielzahl der Proben, während der Mikroskopie bewegen sollen, um jeweilige Messpositionen einzunehmen.

Vorzugsweise ist der zweite optische Detektor eine Messposition "hinter" dem ersten optischen Detektor angeordnet. In anderen Worten befindet sich der zweite optische Detektor an der Messposition n, während sich der erste optische Detektor an der Messposition n+1 befindet. In einem anderen Ausführungsbeispiel können der erste und der zweite optische Detektor um zwei, drei oder vier Messpositionen voneinander getrennt sein. Vorzugsweise ist der Abstand bzw. Anzahl von Messpositionen zwischen dem ersten und dem zweiten optischen Detektor einstellbar. Entsprechend können der erste und der zweite optische Detektor mechanisch miteinander gekoppelt sein. Vorzugsweise kann eine Kopplung stufenlos ein-/verstellbar sein, um einen Abstand zwischen ersten und zweiten optischen Detektor einzustellen. Gemäß einer Ausgestaltung sind der erste und der zweite optische Detektor fest aneinander gekoppelt, so dass der Abstand zwischen den optischen Detektoren im Wesentlichen nicht variabel/veränderlich ist. In einer weiteren Ausgestaltung sind die Detektoren derart miteinander gekoppelt, dass der Abstand der Detektoren zueinander variabel einstellbar ist.

Vorzugsweise ist die erste räumliche Auflösung des ersten optischen Detektors derart gewählt, dass erste optische Detektor erste Bilddaten einer gesamten Probe an einer Messposition n+1 erfassen kann, während ein Messmittelpunkt des zu untersuchenden Bereichs einer Probe an der Messposition n auf der optischen Achse des zweiten optischen Detektors liegt. In anderen Worten reicht die erste räumliche Auflösung des ersten optischen Detektors aus, um eine Darstellung einer gesamten Probe/ Aufbewahrungsposition mittels erster Bilddaten zu erfassen, selbst wenn der Messmittelpunkt der Probe/Aufbewahrungsposition nicht auf der optischen Achse des ersten optischen Detektors liegt.

Vorteilhafterweise wird der zeitliche Aufwand zur Mikroskopie einer Vielzahl von Proben reduziert, indem eine Probe mittels eines ersten optischen Detektors voruntersucht wird, und basierend auf den Ergebnissen dieser Voruntersuchung der zweite optische Detektor eine Hauptuntersuchung eines bestimmten zu untersuchenden Bereichs vornimmt. Insbesondere ist hierbei vorteilhaft, dass der zweite optische Detektor bereits basierend auf genauen Informationen wie Position und Größe eines zu untersuchenden Bereichs den zu untersuchenden Bereich sofort/unmittelbar ansteuern/anfahren und untersuchen kann, während der erste optische Detektor bereits die nächste Probe untersucht. Im Vergleich hierzu ist es bei herkömmlichen Autofokussystemen erforderlich, eine Probe erst vollständig zu untersuchen, wobei eine gewisse Zeit benötigt wird, um einen zu untersuchenden Bereich zu erkennen, und erst dann diesen Bereich ansteuern bzw. anfahren, um weitergehende Untersuchungen durchzuführen.

Weiterhin bevorzugt weisen der erste optische Detektor und der zweite optische Detektor parallel beabstandete optische Achsen auf.

Vorzugsweise weisen die optischen Achsen des ersten und des zweiten optischen Detektors eine Beabstandung auf, die einem Abstand Δd entspricht. Der Abstand Δd kann beispielsweise einem Abstand zwischen einer Mittelpunktsposition einer Messpositon/Probe n und der Mittelpunktsposition der nächsten Messposition/Probe n+1 entsprechen. Weiterhin kann der Abstand Δd einem Abstand zwischen den Mittelpunktspositionen einer Probe n und einer Probe n+2, einer Probe n und einer Probe n+3 oder einer Probe n und einer Probe n+4 entsprechen. In anderen Worten können der erste und der zweite optische Detektor um zwei, drei oder vier Messpositionen voneinander getrennt sein.

In einem bevorzugten Ausführungsbeispiel ist der Abstand Δd einstellbar, so dass je nach Anforderung an eine Untersuchung bzw. an ein Experiment, der Abstand Δd der optischen Achsen des ersten optischen Detektors und des zweiten optischen Detektors anpassbar ist.

Weiterhin bevorzugt sind der erste optische Detektor und der zweite optische Detektor über eine Detektorhalterung miteinander gekoppelt. Vorzugsweise wird mittels der Detektorhalterung eine parallele Beabstandung der optischen Achse des ersten optischen Detektors zur optischen Achse des zweiten optischen Detektors festgelegt bzw. definiert. Eine Detektorhalterung umfasst vorzugsweise eine bzw. mehrere mechanische Fixierungen, welche eine lösbare Koppelung bzw. lösbare Verbindung des ersten und des zweiten optischen Detektors mit der Detektorhalterung ermöglicht.

Vorteilhafterweise ermöglicht die Detektorhalterung, dass eine parallele Beabstandung Δd der optischen Achsen des ersten und des zweiten optischen Detektors einstellbar ist. Beispielsweise kann eine Beabstandung Δd einem Abstand zwischen einer Mittelpunktsposition einer Messpositon/Probe n und der Mittelpunktsposition der dazu nächsten Messposition/Probe n+1 entsprechen. Weiterhin kann der Abstand Δd einem Abstand zwischen den Mittelpunktspositionen der Probe n und der Probe n+2, der Probe n und der Probe n+3 oder der Probe n und der Probe n+4 entsprechen. In anderen Worten können der erste und der zweite optische Detektor um zwei, drei oder vier Messpositionen voneinander beabstandet sein, wobei diese Beabstandung mittels der Detektorhalterung einstellbar ist.

Vorzugsweise ist die Detektorhalterung derart gestaltet, dass zumindest der zweite optische Detektor relativ zum ersten optischen Detektor verfahrbar ist. In anderen Worten kann der zweite optische Detektor, wenn dieser auf/an der Detektorhalterung montiert bzw. fixiert ist, verschiedene Positionen während einer Mikroskopie einnehmen. Entsprechend ist der zweite optische Detektor in eine oder zwei Richtungen verschiebbar bzw. bewegbar während einer Mikroskopie, wobei der erste optische Detektor eine einzige/feste Position an/auf der Detektorhalterung während einer Mikroskopie einnimmt.

Vorteilhafterweise können der erste und der zweite optische Detektor miteinander gekoppelt sein, wobei es möglich ist, dass der zweite optische Detektor einen Messmittelpunkt des zu untersuchenden Bereichs einer Probe an der Messposition n anfahren kann, während der erste optische Detektor einen Messmittelpunkt einer Probe an der Messposition n+1 anfährt. Durch die Kopplung des ersten und des zweiten optischen Detektors ist es jedoch nur erforderlich den zweiten optischen Detektor ausgehend von einem Messmittelpunkt einer Messposition zu einem Messmittelpunkt eines zu untersuchenden Bereichs zu verfahren.

Weiterhin bevorzugt ist die Detektorhalterung mit einem Koordinatentisch gekoppelt, so dass der erste und der zweite optische Detektor relativ zu der Vielzahl der Proben verschiebbar sind.

Die Detektorhalterung kann frei auf dem Koordinatentisch anordenbar sein oder an einem fixen Koppelbereich mit dem Koordinatentisch verbunden werden. Vorzugsweise ist die Detektorhalterung lösbar mit dem Koordinatentisch verbindbar.

Vorteilhafterweise können der erste und der zweite optische Detektor mittels der Detektorhalterung in einfacher Weise aneinandergekoppelt werden, wobei durch ein Steuern/Regeln des Koordinatentisches zugleich der erste und der zweite optische Detektor gesteuert/geregelt werden. In anderen Worten wird durch Anfahren einer Messposition mit dem ersten optischen Detektor zeitgleich/automatisch der zweite optische Detektor in die für ihn bestimmte Messposition gebracht/verfahren. Ist der zweite optische Detektor relativ zum ersten optischen Detektor bewegbar/verfahrbar, kann der zweite optische Detektor zusätzlich ansteuerbar/regelbar sein, um eine bestimmte Position innerhalb seiner Messposition einzunehmen.

Weiterhin bevorzugt erfasst der erste optische Detektor erste Bilddaten basierend auf einer vorgegebenen Fokussierung, also bei einer Fokussierung (Entfernungseinstellung) eines Objektivs des ersten optischen Detektors auf eine vorgegebene Objektentfernung.

In anderen Worten ist der erste optische Detektor derart ausgelegt, dass eine Fokussierung des ersten optischen Detektors ausreicht, um für jede Probe erste Bilddaten zu erfassen, die es erlauben zu untersuchende Bereiche festzulegen.

Unter der Begrifflichkeit "vorgegebene Fokussierung" ist insbesondere zu verstehen, dass eine Fokussierung für den ersten optischen Detektor einstellbar ist, wobei eine bestimmte Fokussierung vorzugsweise vor einer Mikroskopie einer Vielzahl von Proben festgelegt/vorgegeben bzw. eingestellt wird. Diese bestimmte Fokussierung wird dann vorzugsweise während der gesamten Mikroskopie verwendet. Eine geeignete Fokussierung kann in Abhängigkeit von den zu mikroskopierenden Proben gewählt bzw. ausgewählt bzw. eingestellt werden.

Vorteilhafterweise wird hierdurch die Zeitspanne zwischen Anfahren einer Messposition und dem Erfassen von Bilddaten für eine Untersuchung reduziert. Denn der erste optische Detektor ist sofort nach dem Einnehmen/Anfahren der Messposition in der Lage erste Bilddaten zu einer Probe zu erfassen. Der zweite optische Detektor kann - während der erste optische Detektor erste Bilddaten einer nächsten Probe erfasst - sofort zweite Bilddaten einer zuvor mikroskopierten Probe erfassen, da der zweite optische Detektor basierend auf den Daten der Bildauswerteeinrichtung unverzüglich den festgelegten zu untersuchenden Bereich - der zuvor vom ersten optischen Detektor mikroskopierten Probe - ansteuert bzw. anfährt.

Vorzugsweise ist für den zweiten optischen Detektor vor Beginn einer Mikroskopie einer Vielzahl von Proben ebenfalls eine bestimmte Fokussierung festgelegt bzw. eingestellt worden, so dass die Fokussierung des zweiten optischen Detektors nicht oder nur noch geringfügig angepasst werden muss, wenn zweite Bilddaten erfasst werden.

Weiterhin bevorzugt weist der erste optische Detektor eine kürzere Brennweite bzw. eine geringere Vergrößerung als der zweite optische Detektor auf. Weiterhin bevorzugt weist der erste optische Detektor ein größeres Bildfeld als der zweite optische Detektor auf. Weiterhin bevorzugt weist der erste optische Detektor eine höhere Schärfentiefe als der zweite optische Detektor auf. Weiterhin bevorzugt weist der erste optische Detektor eine geringere Bildauflösung als der zweite optische Detektor auf. Weiterhin bevorzugt weist der erste optische Detektor eine geringere Belichtungszeit als der zweite optische Detektor auf.

Insbesondere kann unter einem Bildfeld die maximale Größe eines Bereichs eines Objekts verstanden werden, der durch einen optischen Detektor erfassbar ist, wenn das Objekt fokussiert ist. In anderen Worten definiert ein Bildfeld die maximalen Abmessungen eines Objekts oder einer Probe, die erfasst werden und durch Bilddaten wiedergegeben werden. Weiterhin kann unter einem Bildfeld ein Bildkreis eines Objektivs verstanden werden, wobei der Bildkreis jenen Bereich definiert, welchen ein Objektiv abbilden kann. Weiterhin kann unter einem Bildfeld ein Format bzw. Größe eines Films bzw. eines Bildsensors einer Kamera verstanden werden, auf dem ein erfasstes Bild/Darstellung abgebildet werden kann.

Insbesondere kann unter der Schärfentiefe ein Maß für die Ausdehnung des scharfen Bereichs im Objektraum eines abbildenden optischen Systems verstanden werden. In anderen Worten ist unter der Schärfentiefe die Größe des Entfernungsbereichs, innerhalb dessen ein Objekt/Probe hinlänglich scharf im Abbild der Kameraoptik erscheint, zu verstehen.

Vorzugsweise ist die Schärfentiefe des ersten optischen Detektors derart gewählt, dass alle Bereiche einer Probe in den ersten Bilddaten scharf dargestellt sind. Mit anderen Worten sind sämtliche Bereiche einer Probe, welche unterschiedliche Abstände zu dem Objektiv des ersten optischen Detektors aufweisen, ähnlich scharf bzw. mit ausreichender Schärfe dargestellt. In anderen Worten wird eine Schärfenebene bezüglich der Proben derart eingestellt, dass alle/viele Bereiche der Probe möglichst auf oder zumindest nahe vor oder nahe hinter der Schärfenebene liegen, und so in den ersten Bilddaten scharf dargestellt sind.

Die Schärfentiefe des zweiten optischen Detektors ist vorzugsweise derart gewählt, dass die zu untersuchenden Bereiche der Vielzahl von Proben in den erfassten zweiten Bilddaten scharf dargestellt/ wiedergegeben werden. In diesem Fall kann ein gesamter zu untersuchender Bereich ähnlich scharf dargestellt sein. Die Schärfentiefe des zweiten optischen Detektors kann weiterhin derart eingestellt werden, dass bestimmte Strukturen innerhalb eines zu untersuchenden Bereichs auf den zweiten Bilddaten scharf dargestellt sind, während andere Strukturen, die für eine Untersuchung bzw. Analyse weniger oder nicht scharf dargestellt werden. Eine Schärfentiefe kann beispielsweise basierend auf einer Referenzprobe /-proben ausgewählt bzw. eingestellt werden.

Vorzugsweise ist die Schärfentiefe des ersten optischen Detektors größer als die Schärfentiefe des zweiten optischen Detektors. Bei einer festen Kopplung der beiden Detektoren kann damit eine Fokussierung des zweiten optischen Detektors beispielsweise durch eine entsprechende Verschiebung des zweiten Detektors (oder dessen Objektivs) entlang der optischen Achse erfolgen, ohne dass die gleichzeitige, daran gekoppelte Verschiebung des ersten Detektors dazu führt, dass die ersten Bilddaten (der nächsten Messposition) unscharf werden.

In analoger Weise ist vorzugsweise das Bildfeld des ersten Detektors groß genug, um selbst bei einer festen Kopplung der beiden Detektoren miteinander eine (laterale) Verschiebung des zweiten Detektors zur Ausrichtung auf den zu untersuchenden Bereich innerhalb der ersten Bilddaten zu erlauben, ohne dass die gleichzeitige, daran gekoppelte (laterale) Verschiebung des ersten Detektors dazu führt, dass die nächste Probe aus dem Bildfeld des ersten Detektors rücken würde.

Unter einer Bildauflösung kann insbesondere die Anzahl der Pixel bzw. Bildpunkte und/oder das Rauschverhalten des Bildsensors einer Kamera verstanden werden. Die Bildauflösung des ersten optischen Detektors kann beispielsweise derart gewählt/eingestellt werden bzw. vorgesehen sein, dass zumindest Grobstrukturen erkennbar sind. In anderen Worten ist es vorzugsweise nicht erforderlich, dass der erste optische Detektor alle Strukturen einer Probe im Detail erfasst. Vorzugsweise ist die Bildauflösung ausreichend, dass basierend auf den ersten Bilddaten ein zu untersuchender Bereich eindeutig erkennbar bzw. definierbar ist.

Die Bildauflösung des zweiten optischen Detektors ist vorzugsweise derart eingestellt bzw. bestimmt, dass alle Strukturen bzw. alle "interessanten" Strukturen innerhalb des zu untersuchenden Bereichs deutlich erkennbar sind. Vorzugsweise ist die Bildauflösung des zweiten optischen Detektors derart gewählt, dass bei einem Vergrößern der zweiten Bilddaten bzw. Reinzoomen in die zweiten Bilddaten die Strukturen deutlich ersichtlich bleiben.

Vorzugsweise reicht die Brennweite/ Vergrößerung des ersten optischen Detektors aus, um erste Bilddaten zu erfassen/erzeugen, die Strukturen der Proben ausreichend deutlich darstellen, so dass ein zu untersuchender Bereich festgelegt werden kann. Vorzugsweise ist die Vergrößerung des ersten optischen Detektors derart gewählt, dass eine Probe bzw. eine Aufbewahrungsposition vollständig in den ersten Bilddaten enthalten bzw. umfasst ist.

Insbesondere kann die Brennweite/Vergrößerung des ersten optischen Detektors derart gewählt werden, dass ein Bildfeld bzw. Bildweite bzw. ein Bildwinkel groß genug ist, um eine Probe bzw. eine Aufbewahrungsposition umfassend/ vollständig zu erfassen. Die Vergrößerung des ersten optischen Detektors kann in Abhängigkeit der zu untersuchenden/ mikroskopierenden Proben gewählt bzw. bestimmt werden.

Unter einem umfassenden bzw. vollständigen Erfassen einer Probe kann insbesondere verstanden werden, dass Randbereiche von Proben nicht von dem ersten optischen Detektor erfasst werden, wenn die Proben in bestimmten/allen Randbereichen keine "interessanten" Strukturen bzw. zu untersuchende Bereiche aufweisen. Entsprechend in einem solchen Fall unter einer Probe nur ein potenziell "interessanter" Bereich bzw. eine interessante" Struktur zu verstehen. In anderen Worten können Bereiche von Proben, die von vornherein als "uninteressant" bzw. irrelevant definiert/bestimmt/identifiziert werden können, beim Erfassen von ersten Bilddaten unberücksichtigt bleiben. In einem solchen Fall können eine Bildweite bzw. eine Vergrößerung derart gewählt bzw. festgelegt werden, dass "uninteressante" Bereiche nicht durch den ersten optischen Detektor erfasst werden.

Eine Brennweite/Vergrößerung des zweiten optischen Detektors ist vorzugsweise derart gewählt, dass ein zu untersuchender Bereich vollständig erfasst wird. In anderen Worten wird der gesamte zu untersuchende Bereich durch erfasste zweite Bilddaten dargestellt bzw. wiedergegeben. Vorzugsweise ist eine Größe bzw. ungefähre Größe von zu untersuchenden Bereichen einer Vielzahl von Proben in Abhängigkeit von den zu mikroskopierenden Proben abschätzbar bzw. bestimmbar. Entsprechend wird eine Brennweite/Vergrößerung vorzugsweise derart gewählt, dass eine zu "erwartende" bzw. "maximale" Größe von zu untersuchenden Bereichen mittels des zweiten optischen Detektors erfasst werden kann, während die Bildweite bzw. der Bildwinkel ausreicht, um zu untersuchende Bereiche vollständig darzustellen. Weiterhin vorzugsweise wird eine Vergrößerung derart gewählt, dass "interessante" Strukturen bzw. zu untersuchende Aspekte eines zu untersuchenden Bereichs derart vergrößert erfasst bzw. dargestellt werden, dass eine Analyse ermöglicht wird.

Der erste optische Detektor kann beispielsweise ein oder mehrere Zoomobjektive und/oder auswechselbare Objektive aufweisen. Der zweite optische Detektor kann beispielsweise ebenfalls ein oder mehrere Zoomobjektive und/oder auswechselbare Objektive aufweisen. Vorzugsweise kann ein geeignetes Objektiv des ersten und/oder des zweiten optischen Detektor basierend auf einer Referenzprobe bzw. - proben gewählt werden. In diesem Fall können eine oder mehrere der zu mikroskopierenden Proben oder vergleichbare bzw. ähnliche Proben verwendet werden, um eine geeignete Vergrößerung/Bildfeld/Schärfentiefe festzulegen bzw. ein geeignetes Objektiv auszusuchen/auszuwählen. Dieses Auswählen kann vorzugsweise automatisch vorgenommen werden. Alternativ oder zusätzlich können basierend auf Probenspezifikationen bzw. Probeneigenschaften Objektive ausgewählt werden. Vorzugsweise kann dieses Auswählen basierend auf Datenbankabfragen und/oder computergestützt mittels Benutzereingaben erfolgen.

Die Ergebnisse eines solchen Auswahlvorgangs können vorzugsweise direkt oder mittels einer Datenübertragung an die Vorrichtung zur Mikroskopie weitergegeben werden, so dass ein geeignetes Objektiv automatisch eingesetzt wird.

Vorteilhafterweise kann durch die Verwendung des ersten und des zweiten optischen Detektors die Geschwindigkeit für eine Mikroskopie einer Vielzahl von Proben reduziert werden, wobei gleichzeitig die Kosten für die Bereitstellung von zwei optischen Detektoren nur geringfügig ansteigt, da nur an den zweiten optischen Detektor besonders hohe Anforderungen hinsichtlich der Bildqualität wie für Labor-Mikroskope üblich erfüllen muss.

Weiterhin bevorzugt weisen der erste optische Detektor und der zweite optische Detektor eine gemeinsame Fokalebene auf.

Weiterhin bevorzugt umfasst der erste optische Detektor eine Webcam. Weiterhin bevorzugt umfasst der erste optische Detektor einen CCD-Sensor. Weiterhin bevorzugt umfasst der erste optische Detektor einen CMOS-Sensor. Weiterhin bevorzugt umfasst der erste optische Detektor einen Fluoreszenzdetektor. Weiterhin bevorzugt umfasst der zweite optische Detektor einen CCD-Sensor. Weiterhin bevorzugt umfasst der zweite optische Detektor einen CMOS-Sensor. Weiterhin bevorzugt umfasst der zweite optische Detektor einen Fluoreszenzdetektor.

Insbesondere kann unter einer Webcam eine Aufnahmevorrichtung bzw. Kamera verstanden werden, welche mittels eines Datenübertragungskabel bzw. einer Datenübertragungsschnittstelle erfasste erste Bilddaten an eine Bildauswerteeintrichtung übertragen kann. Weiterhin kann insbesondere unter einer Webcam eine Kamera verstanden werden, welche in (kurzen) Intervallen Bilder aufnehmen kann.

Weiterhin bevorzugt umfasst die Vorrichtung eine Manipuliereinrichtung zum Manipulieren von Proben.

Insbesondere kann eine Probe mittels der Manipuliereinrichtung beinflusst werden.

Beispielsweise kann eine Manipuliereinrichtung einen Spender für eine oder mehrere Substanzen umfassen, so dass Proben kurz vor oder während dem Erfassen von Bilddaten mit einer Substanz reagieren können. Dies ist insbesondere vorteilhaft, wenn eine Reaktion zwischen einer Probe und einer Substanz zeitlich sehr schnell verläuft. In diesem Fall kann in einfacher Weise der gesamte Zeitraum der Reaktion erfasst werden.

Weiterhin kann die Manipuliereinrichtung Werkzeuge bzw. Untersuchungsequipment umfassen bzw. tragen, so dass beispielsweise vor oder während einer Untersuchung einer Probe mechanisch auf diese Probe eingewirkt werden kann. Vorzugsweise ist eine Manipuliereinrichtung derart angeordnet, dass Proben vor oder während eines Erfassen von ersten und/oder zweiten Bilddaten manipuliert werden können. Vorzugsweise ist die Manipuliereinrichtung derart ausgestaltet, dass Untersuchungsequipment gewechselt bzw. ausgewechselt werden kann. Beispielsweise könnte eine Nadel bzw. Kanüle Untersuchungsequipment der Manipuliereinrichtung sein. Weiterhin kann eine Vorrichtung zur Mikroskopie zwei oder mehr Manipuliereinrichtungen umfassen. Vorzugsweise sind die Manipuliereinrichtungen lösbar koppelbar/verbindbar mit der Vorrichtung verbunden/gekoppelt. Weiterhin können die Manipuliereinrichtungen verschiebbar bzw. beweglich gekoppelt bzw. montiert sein. Alternativ oder zusätzlich können die Manipuliereinrichtungen an vorgegebenen Koppelbereichen mit der Vorrichtung gekoppelt/koppelbar sein.

Vorzugsweise können eine oder mehrere Manipuliereinrichtungen an der Detektorhalterung angeordnet sein bzw. an diese gekoppelt werden.

Weiterhin vorzugsweise kann ein weiterer optischer Detektor an die Manipuliereinrichtung gekoppelt werden.

Weiterhin bevorzugt nimmt der zweite optische Detektor zum Erfassen zweiter Bilddaten eine Position ein, in der ein Zentrum eines zu untersuchenden Bereichs auf der optischen Achse des zweiten optischen Detektors liegt.

In anderen Worten fährt der zweite optische Detektor ggf. den zu untersuchenden Bereich an, so dass der zu untersuchende Bereich bestmöglichst in der Bildmitte der zweiten Bilddaten positioniert ist.

Gemäß einer Ausführung sind der erste und der zweite optische Detektor derart aneinander gekoppelt, dass eine Bewegung/Verfahren des zweiten optischen Detektors gleichermaßen zu einem Verfahren des ersten optischen Detektors führt. In diesem Fall ist das Bildfeld des ersten optischen Detektors derart groß gewählt, dass sichergestellt ist, dass der erste optische Detektor erste Bilddaten einer "vollständigen" bzw. "gesamten" Probe erfasst. In anderen Worten wird das Bildfeld es ersten optischen Detektors angepasst, so dass die ersten Bilddaten des ersten optischen Detektors immer die Probe bzw. die relevanten Bereiche einer Probe beinhaltet.

In einer anderen Ausführungsform ist der zweite optische Detektor gegenüber dem ersten optischen Detektor relativ bewegbar/verschiebbar, so dass der zweite optische Detektor in bestimmten Grenzen bzw. einem gewissen Koordinatenbereich unabhängig von einer Bewegung des ersten optischen Detektors beweglich bzw. verschiebbar ist.

Ein weiterer Aspekt der vorliegenden Erfindung betrifft ein Verfahren zur Mikroskopie einer Vielzahl von Proben, welche insbesondere an einer Vielzahl von Messpositionen angeordnet sind, umfassend:
- Erfassen ersten Bilddaten mittels eines ersten optischen Detektors, welcher ausgelegt ist, nacheinander eine Vielzahl von Messpositionen einzunehmen und an jeder Messposition erste Bilddaten einer Probe, welche insbesondere einer jeweiligen Messposition zugeordnet ist, mit einer ersten räumlichen Auflösung zu erfassen;
- Ermitteln (Festlegen) eines zu untersuchenden Bereichs mittels einer Bilddatenauswerteeinrichtung, die ausgelegt ist, für jede Probe bzw. Messposition einen innerhalb der jeweiligen ersten Bilddaten dargestellten, zu untersuchenden Bereich der (dieser Messposition zugeordneten) Probe festzulegen; und
- Erfassen zweiten Bilddaten mittels eines zweiten optischen Detektors, welcher derart an den ersten optischen Detektor gekoppelt ist, dass der zweite optische Detektor dem ersten optischen Detektor nachfolgt, so dass der zweite optische Detektor (nacheinander jeweils die) Messpositionen einnimmt, die zeitlich vorher der erste optische Detektor eingenommen hatte, und wobei der zweite optische Detektor ausgelegt ist, für jede Probe bzw. Messposition zweite Bilddaten von dem zu untersuchenden Bereich der jeweiligen (dieser Messposition zugeordneten) Probe mit einer zweiten räumlichen Auflösung zu erfassen, die höher ist als die erste räumliche Auflösung.

Vorzugsweise werden die erfassten zweiten Bilddaten ausgewertet bzw. analysiert, wobei dies computergestützt bzw. vollautomatisch geschehen kann. Alternativ oder zusätzlich kann ein Auswerten von zweiten Bilddaten von einem Benutzer durchgeführt werden.

Bevorzugt kann das Verfahren zur Mikroskopie einer Vielzahl von Proben ein oder mehrere Aspekte hinsichtlich Nutzung bzw. Ausgestaltung der Vorrichtung zur Mikroskopie umfassen.

Die Erfindung wird nachfolgend anhand begleitender Zeichnungen beispielhaft beschrieben. Dabei zeigt:
- Fig. 1:: eine schematische Darstellung einer Vorrichtung zur Mikroskopie;
- Fig. 2:: eine Darstellung erster Bilddaten; und
- Fig. 3:: eine Darstellung zweiter Bilddaten.

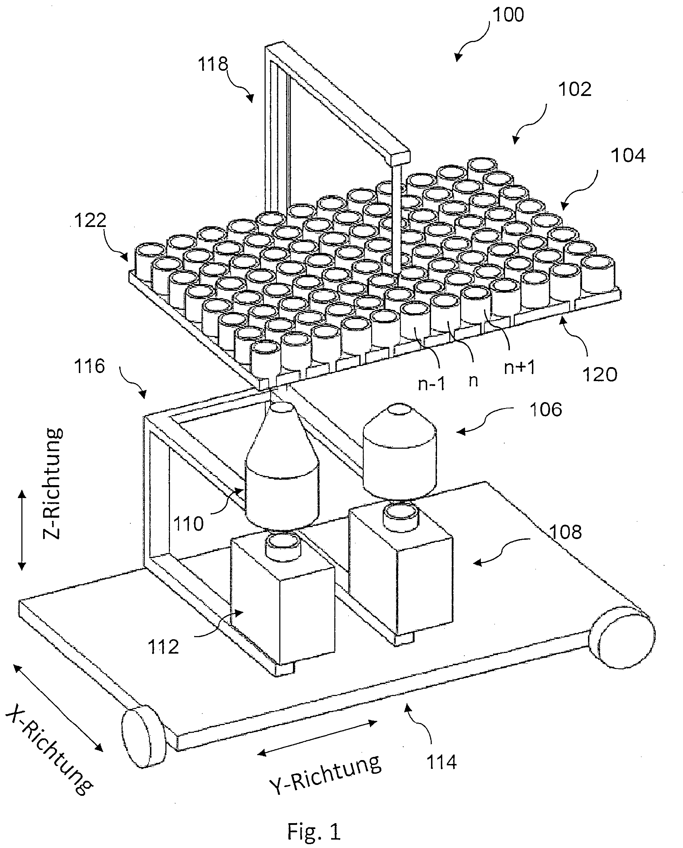

- **Fig. 1**: zeigt eine schematische Darstellung einer Vorrichtung zur Mikroskopie 100,
welche einen ersten optischen Detektor 106, 108 und einen zweiten optischen Detektor 110, 112 umfasst. Der erste optische Detektor umfasst insbesondere ein erstes Objektiv 106 und ein erstes Kameramodul 108. Der zweite optische Detektor umfasst ein zweites Objektiv 110 und ein zweites Kameramodul 112. Der erste optische Detektor 106, 108 und der zweite optische Detektor 110, 112 sind mittels einer Detektorhalterung 116 miteinander gekoppelt. Die Detektorhalterung 116 ist an einem Koordinatentisch 114 angeordnet. Der Koordinatentisch 114 kann beispielsweise eine motorisierte XY-Stage sein. Entsprechend können durch Verschieben bzw. Bewegen der Detektorhalterung 116 die beiden Detektoren verschoben bzw. bewegt werden. Insbesondere können die optischen Detektoren damit synchron relativ zu einer Probenhalterung 120 bewegt werden. Die Vorrichtung 100 umfasst weiterhin eine Manipuliereinrichtung 118, mit welcher chemisch und/oder mechanisch auf Proben eingewirkt werden kann. Beispielsweise können Substanzen zu den Proben hinzugefügt werden.

Wie in Figur 1 ersichtlich, kann eine Vielzahl von Proben 102 matrixartig auf der Probenhalterung 120 der Vorrichtung 100 positioniert sein. Jede Probe 104 ist hierbei in einem Aufbewahrungsbehältnis 122 angeordnet. Dabei sind die Aufbewahrungsbehältnisse insbesondere rasterartig bzw. matrixartig vorzugsweise mit gleichen Abständen in Reihen und Spalten angeordnet.

Die Vielzahl von Proben 102 kann durch den ersten optischen Detektor 106, 108 untersucht/mikroskopiert werden, indem der erste optische Detektor 106, 108 der Reihe nach verschiedene X-Y-Koordinaten innerhalb des ersten Detektorarbeitsraums anfährt bzw. einnimmt, wobei jede Messposition einer X-Y-Koordinate entspricht, und jede Messpostition einer jeweiligen Probe 104 bzw. einem entsprechenden Aufbewahrungsbehältnis zugeordnet ist. Dazu ist in der Vorrichtung 100 vorzugsweise eine vorgegebene Definition (Festlegung) der Rasterung, also der Lage der einzelnen Messpositionen, hinterlegt. Die Proben 104 sind zum ersten optischen Detektor 106, 108 in einer Z-Richtung, also insbesondere in Richtung parallel zu einer optischen Achse des ersten Objektivs 106, beabstandet angeordnet. Hat der erste optische Detektor 106, 108 eine Messposition bezüglich einer Probe 104 eingenommen, liegt vorzugsweise ein Messmittelpunkt einer Probe 104 auf oder zumindest in der Nähe der optischen Achse des ersten optischen Detektors 106, 108. Beispielsweise kann ein Mittelpunkt eines Aufbewahrungsbehältnisses 122, in welcher eine Probe 104 angeordnet ist, als Messmittelpunkt der Probe 104 definiert/festgelegt werden.

In einer anderen Ausführungsform ist die Vielzahl von Proben 102 nicht in einer Mikrotiterplatte oder in Aufbewahrungsbehältnissen 122 angeordnet, sondern in einer Petrischale oder ähnlichem. In diesem Fall kann die Petrischale - beispielsweise mittels eines (Koordinaten-) Gitters - in Unterbereiche/ Zellen eingeteilt werden, wobei jeder Unterbereich/Zelle einem bestimmten Koordinatenbereich entspricht. Jede(r) Unterbereich/Zelle entspricht dann einer Messposition des ersten optischen Detektors. Hierbei kann die X-Y-Koordinate in der Mitte des Koordinatenbereichs der Zelle als Messmittelpunkt einer Probe angesehen/definiert werden.

Der zweite optische Detektor kann eine Messposition "hinter" dem ersten optischen Detektor angeordnet sein. In anderen Worten befindet sich der zweite optische Detektor an der Messposition n, während sich der erste optische Detektor an der Messposition n+1 befindet. In einem anderen Ausführungsbeispiel können der erste und der zweite optische Detektor um zwei, drei oder vier Messpositionen voneinander getrennt sein. Vorzugsweise ist der Abstand bzw. die Anzahl von Messpositionen zwischen dem ersten und dem zweiten optischen Detektor einstellbar. Entsprechend ist die Detektorhalterung 116 einstellbar, so dass eine Kopplung stufenlos ein-/verstellbar ist, um einen Abstand zwischen dem ersten und dem zweiten optischen Detektor, insbesondere zwischen einer optischen Achse des ersten Objektivs 106 und einer optischen Achse des zweiten Objektivs 110, einzustellen.

Der erste optische Detektor 106, 108 kann insbesondere als Vordetektor verstanden werden, mit dem Voruntersuchungen von Proben vorgenommen werden. Der zweite optische Detektor 110, 112 kann insbesondere als Hauptdetektor verstanden werden, mit dem Detailuntersuchungen von Proben vorgenommen werden. Durch den Vordetektor 106, 108 (Kamera 108), welcher versetzt zum Hauptdetektor 110, 112 angebracht ist, können an einer (n+1)-ten Position (nächste Probe) bereits Strukturen erkannt und ausgewertet werden, welche dem Hauptdetektor 110, 112 Informationen bezüglich einer Lage insbesondere in einer X,Y-Ebene und/oder Farbe von Probenstrukturen bereitstellen/ "füttern", während der Hauptdetektor 110, 112 an der Position n eine Probe untersucht. Die Informationen für den Hauptdetektor 110, 112 werden insbesondere mittels einer nicht dargestellten Bildauswerteeinrichtung erfasst, welche entsprechende Daten an den Hauptdetektor 110, 112 weitergibt. Der besondere Aufbau des erfindungsgemäßen Mikroskops 100 erlaubt es, eine versetzte Kamera 108 außerhalb des optischen Pfades des Hauptdetektors 110, 112 zu positionieren. Der Hauptdetektor 110, 112 verliert dadurch keine Zeit zum Erkennen von Strukturen, sondern fährt direkt an die entsprechende Position, welche von dem Vordetektor 106, 108 geliefert wird.

Vordetektor 106, 108 und Hauptdetektor 110, 112 kommunizieren vorzugsweise mittels eines Rechners/Computers oder einer Kommunikations-Schnittstelle miteinander, welcher Informationen insbesondere zu Lage und/oder Farbe und/oder Struktur aus den ersten Bilddaten des Vordetektors 106, 108 an den Hauptdetektor 110, 112 liefert. Sowohl Vordetektor 106, 108 als auch Hauptdetektor 110, 112 beinhalten vorzugsweise ein anwendungsspezifisches optisches System und einen CCD und/oder CMOS basierenden Sensor. Vorzugsweise kann standardmäßig vorgesehen sein, dass der Hauptdetektor 110, 112 in einer Standard-Konfiguration einen sog. Standard-"widefield"-Aufbau mit der Möglichkeit zur Fluoreszenzdetektion aufweist. Dies kann auch für den Vordetektor 106, 108 gelten, wobei dieser - je nach Anwendung - lediglich eine einfache Webcam umfassen kann, welche eine "feste" Vergrößerung aufweist.

Das Verhältnis von Vergrößerung des Vordetektors an einer Position/Messposition n zum Hauptdetektor ist variabel und abhängig von der Anwendung, d.h. abhängig von der Art der Vordetektion die durchgeführt wird. Besonders bevorzugt wird die Vordetektion mit geringer Vergrößerung durchgeführt. Der Vordetektor an der Position n kann vorzugsweise einen großen Bereich mit hoher Tiefenschärfe bei gleichzeitiger geringer Auflösung detektieren. Die (ersten) Bilddaten der Vordetektion werden mit Hilfe einer Bildverarbeitungssoftware (z.B. Labview, Matlab oder open source Pakete) in Echtzeit verarbeitet. Ziel dieser automatischen Bildverarbeitung ist die automatische Detektion einer Struktur oder Region von Interesse und die Extraktion der entsprechenden X,Y-Parameter/Koordinaten. Diese Koordinaten/ Parameter werden benutzt um das Hauptdetektionsobjektiv zentriert unter der detektierten Region/zu untersuchender Bereich zu positionieren und entsprechende hochauflösenden 2-dimensionale bzw. 3-dimensionale Darstellungen/Daten als zweite Bilddaten aufzunehmen.

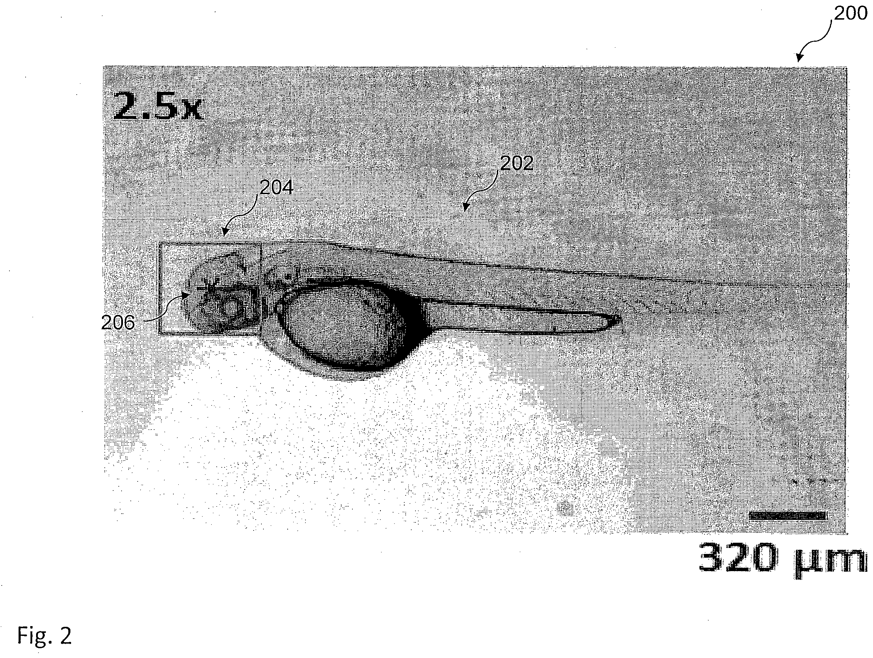

**Fig. 2** zeigt erste Bilddaten 200 einer Probe 202, welche beispielsweise mit einem ersten Detektor 106, 108 aufgenommen wurden. Die in der vorliegenden Fig. 2 dargestellte Probe ist eine Zebrafischlarve. Die ersten Bilddaten 200 wurden mit einer ersten Vergrößerung erstellt, welche in Fig. 2 mit der Angabe "2.5x" identifiziert ist. Für eine weitere Untersuchung/ Hauptuntersuchung ist jedoch nur das Gehirn der Zebrafischlarve interessant/ relevant, so dass von den anderen Bereichen der Zebrafischlarve keine Bilddaten erforderlich sind. Nachdem aber die Position der Gehirns innerhalb eines Probenbehältnisses nicht von vornherein bekannt ist, würde es für bei einer anfänglichen Fokussierung auf eine Bildgröße, welche der Größe des Gehirns entspricht, vergleichsweise lange dauern, um die tatsächliche Position des Gehirns aufzufinden. Auf Basis der Überblicksansicht in der ersten Bilddaten kann jedoch die genaue Position des Gehirn leicht ermittelt werden. Bei Vorgabe bestimmter Bildstrukturen, kann dies vorzugsweise sogar automatisch erfolgen.

Die ersten Bilddaten 200 werden dazu von einer Bildauswerteeinrichtung (nicht gezeigt) analysiert bzw. ausgewertet, wobei die Bildauswerteeinrichtung nur den "interessanten" Bereich der Probe, nämlich das Gehirn der Zebrafischlarve, als zu untersuchenden Bereich festlegt. Der von der Bildauswerteeinrichtung festgelegte zu untersuchende Bereich ist in Fig. 2 durch einen Kasten 204 eingerahmt dargestellt. Die Position des Kastens 204 in den ersten Bilddaten kann in eine Position bzw. einen Koordinatenbereich umgerechnet bzw. transformiert werden, den dieser Bereich 204 der Probe in dem Aufbewahrungsbehältnis (Probenbehältnis) aufweist.

In anderen Worten kann basierend auf ersten Bilddaten 200 festgelegt werden, welche Position/ Koordinaten der zweite optische Detektor 110, 112 einnehmen muss, um zweite Bilddaten der Probe von diesem Bereich 204 erfassen zu können bzw. in welchem Koordinatenbereich zweite Bilddaten von der Probe erfasst werden müssen. Eine Markierung 206 innerhalb des zu untersuchenden Bereichs 204 markiert einen Mittelpunkt des zu untersuchenden Bereichs basierend auf dem eine Position/Messposition des zweiten optischen Detektors 110, 112 angefahren bzw. angesteuert werden kann.

Vorzugsweise ist die erste räumliche Auflösung des ersten optischen Detektors 106, 108 derart gewählt, dass der erste optische Detektor 106, 108 die ersten Bilddaten 200 einer gesamten Probe 104 an einer Messposition n+1 erfassen kann, während ein Messmittelpunkt des zu untersuchenden Bereichs einer anderen Probe 104 an der Messposition n auf der optischen Achse des zweiten optischen Detektors 110, 112 liegt. In anderen Worten reicht die erste räumliche Auflösung bzw. ein Bildbereicht des ersten optischen Detektors 106, 108 aus, um eine Darstellung einer gesamten Probe 104 bzw. Aufbewahrungsposition mittels erster Bilddaten 200 zu erfassen, selbst wenn der Messmittelpunkt der Probe/Aufbewahrungsposition nicht auf der optischen Achse des ersten optischen Detektors 106, 108 liegt. Dies kann beispielsweise der Fall sein, wenn der zweite optische Detektor 110, 112 einen Mittelpunkt 206 eines zu untersuchenden Bereichs 204 anfährt, der ausserhalb eines Messmittelpunktes der (zuvor untersuchten bzw. zu untersuchenden) Probe für den ersten optischen Detektor liegt, wobei jedoch der erste und der zweite optische Detektor vorzugsweise fest aneinander gekoppelt sind, so dass eine Bewegung des einen Detektors unmittelbar zur gleichen Bewegung des anderen Detektors führt.

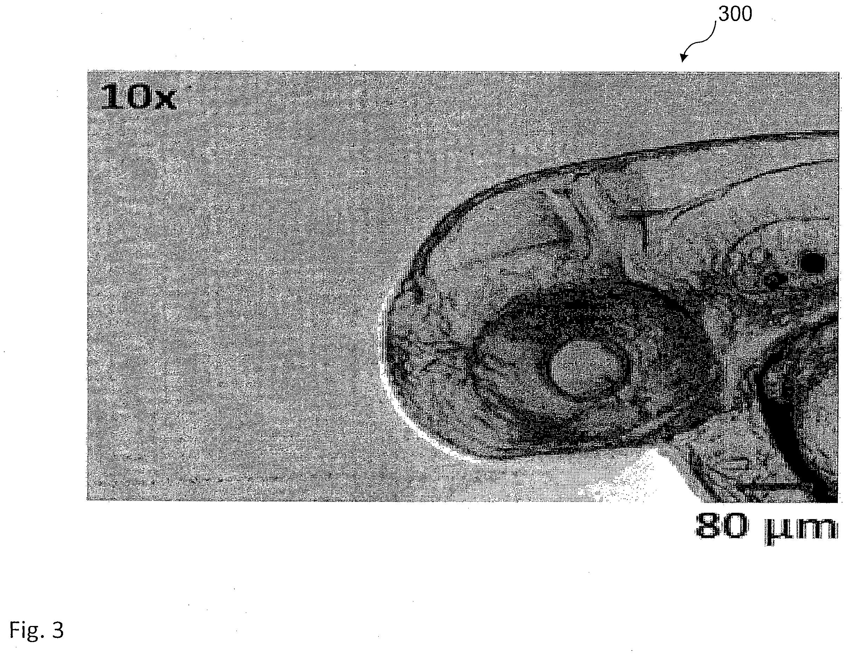

Fig. 3 zeigt zweite Bilddaten 300, welche einen festgelegten zu untersuchenden Bereich 204 der Zebrafischlarve/Probe 202 aus Fig. 2 mit einer zweiten Vergrößerung darstellen, welche in Fig. 3 mit der Angabe "10x" identifiziert ist. Wie aus Figur 3 ersichtlich, umfassen die zweiten Bilddaten 300 eine Darstellung eines Ausschnitts der Zebrafischlarve, der den gesamten festgelegten zu untersuchenden Bereich beinhaltet.

In der in Fig. 3 veranschaulichten bevorzugten Ausführungsform ist die Vergrößerung und/oder die Auflösung der zweiten Bilddaten 300 etwa 4-mal so groß wie die Vergrößerung bzw. die Auflösung der ersten Bilddaten 200 als Fig. 2. Im allgemeinen die Vergrößerung und/oder die Auflösung des zweiten optischen Detektors im Bereich von etwa 1-mal bis etwa 1000-mal, weiter bevorzugt im Bereich von etwa 1-mal bis etwa 100-mal so groß wie die Vergrößerung und/oder die Auflösung des ersten Detektors. In einem weiteren Aspekt ist die Vergrößerung und/oder die Auflösung des zweiten optischen Detektors vorzugsweise zumindest etwa 2-mal noch weitere bevorzugt zumindest etwa 4-mal so groß wie die Vergrößerung und/oder die Auflösung des ersten optischen Detektors. Insbesondere kann ein Vergrößerungsbereich bzw. ein Verhältnis der Vergrößerung des ersten optischen Detektors zu der des zweiten optischen Detektors je nach Anwendung bestimmt bzw. ausgewählt werden. Vorzugsweise können die Vergrößerungen der optischen Detektoren vor einer Mikroskopie eingestellt bzw. festgelegt werden.

Wie durch die Figuren 2 und 3 deutlich wird, nimmt der erste optische Detektor 106, 108 an einer Messposition n-1 ein niedrigauflösendes Bild (erste Bilddaten 200) auf. Gemäß dem vorliegen Beispiel geschieht dies mit einem Objektiv, welches beispielsweise etwa 2,5-fach vergrößert. Die Bildauswerteeinrichtung erkennt die embryonale Kopfregion, welche als "interessante" Struktur bzw. zu untersuchender Bereich 204 festgelegt/definiert wurde, vorzugsweise automatisch, insbesondere auf Grundlage einer automatischen Mustererkennung. Anschließend werden mittels des zweiten optischen Detektors 110, 112 an der Messposition n-1 für den zu untersuchenden Bereich 204 zweite Bilddaten 300 von der Probe 202 erfasst, welche hochauflösend sind und beispielsweise mit einem 10-fach vergrößernden Objektiv aufgenommen werden. Während der zweite optische Detektor 110, 112 an der Messposition n-1 die zweiten Bilddaten 300 erfasst, ist der erste optische Detektor bereits an der Messposition n und erfasst (neue) erste Bilddaten zu einer anderen Probe.

Die Abbildungen in den Figuren 2 und 3 sind ähnlich zu Abbildungen in Peravali, R., Gehrig, J., et al. Biotechniques 50(5): 319-324. Mit der vorliegenden Erfindung, wie sie oben anhand einer bevorzugten Ausführungsform mit Bezug auf diese Figuren beschrieben wurde, können solche Abbildungen wesentlich effizienten insbesondere für eine Vielzahl von Proben erzeugt und ausgewertet werden. Die Erfindung wird durch die beigefügten Ansprüche definiert.

### Bezugszeichenliste

- 100: Vorrichtung zur Mikroskopie
- 102: Vielzahl von Proben
- 104: Probe
- 106: Objektiv des ersten optischen Detektors (erstes Objektiv)
- 108: Kameramodul des ersten optischen Detektors
- 110: Objektiv des zweiten optischen Detektor (zweites Objektiv)
- 112: Kameramodul des zweiten optischen Detektor
- 114: Koordinatentisch
- 116: Detektorhalterung
- 118: Manipuliereinrichtung
- 120: Probenhalterung
- 122: Aufbewahrungsbehältnis
- 200: erste Bilddaten 200
- 204: zu untersuchender Bereich
- 206: Markierung, Mittelpunkt des zu untersuchenden Bereichs
- 300: zweite Bilddaten

## Patentansprüche

1. Vorrichtung zur sequenziellen Mikroskopie (100) einer Vielzahl von Proben (102), welche an einer Vielzahl von Messpositionen angeordnet sind, umfassend:
- einen ersten optischen Detektor (106, 108), welcher ein erstes Objektiv (106) umfasst und ausgelegt ist, nacheinander die Vielzahl von Messpositionen einzunehmen und an jeder Messposition erste Bilddaten (200) einer Probe (104) mit einer ersten räumlichen Auflösung zu erfassen;
- eine Bilddatenauswerteeinrichtung, die ausgelegt ist, für jede Probe (202) einen innerhalb der jeweiligen ersten Bilddaten (200) dargestellten, zu untersuchenden Bereich (204) der Probe festzulegen;
- einen zweiten optischen Detektor (110, 112), welcher ein zweites Objektiv (110) umfasst und derart an den ersten optischen Detektor (106, 108) gekoppelt ist, dass er dem ersten optischen Detektor (106, 108) nachfolgt, so dass der zweite optische Detektor (110, 112) nacheinander die Vielzahl von Messpositionen einnimmt, die zeitlich vorher der erste optische Detektor (106, 108) eingenommen hatte, während sich der erste optische Detektor bereits an einer weiteren Messposition befindet, und wobei der zweite optische Detektor (110, 112) ausgelegt ist, für jede Probe (202) zweite Bilddaten (300) von dem zu untersuchenden Bereich (204) der jeweiligen Probe (202) mit einer zweiten räumlichen Auflösung zu erfassen, die höher ist als die erste räumliche Auflösung.

2. Vorrichtung (100) nach einem der vorangegangenen Ansprüche, wobei der erste optische Detektor (106, 108) und der zweite optische Detektor (110, 112) über eine Detektorhalterung (116) derart miteinander gekoppelt sind, dass eine optische Achse des ersten optischen Detektors (106, 108) und eine optische Achse des zweiten optischen Detektors (110, 112) in einem festgelegten Abstand parallel zueinander angeordnet sind.

3. Vorrichtung (100) nach einem der vorangegangenen Ansprüche, wobei die Detektorhalterung (116) mit einem Koordinatentisch (114) gekoppelt ist, so dass der erste und der zweite optische Detektor (106, 108; 110, 112) relativ zu der Vielzahl der Messpositionen (102) verschiebbar sind.

4. Vorrichtung (100) nach einem der vorangegangenen Ansprüche, wobei der erste optische Detektor (106, 108) erste Bilddaten (200) basierend auf einer vorgegebenen Fokussierung erfasst.

5. Vorrichtung (100) nach einem der vorangegangenen Ansprüche, wobei der erste optische Detektor (106, 108) eine kürzere Brennweite und/oder ein größeres Bildfeld und/oder eine höhere Schärfentiefe und/oder eine geringere Bildauflösung und/oder eine geringere Belichtungszeit als der zweite optische Detektor (110, 112) aufweist.

6. Vorrichtung (100) nach einem der vorangegangenen Ansprüche, wobei der erste optische Detektor (106, 108) und der zweite optische Detektor (110, 112) eine gemeinsame Fokalebene aufweisen.

7. Vorrichtung (100) nach einem der vorangegangenen Ansprüche, wobei der erste optische Detektor (106, 108) eine Webcam und/oder einen CCD-Sensor und/oder einen CMOS-Sensor und/oder einen Fluoreszenzdetektor umfasst, und wobei der zweite optische Detektor (110, 112) einen CCD-Sensor und/oder einen CMOS-Sensor und/oder einen Fluoreszenzdetektor umfasst.

8. Vorrichtung (100) nach einem der vorangegangenen Ansprüche, wobei die Vorrichtung (100) eine Manipuliereinrichtung (118) zum Manipulieren von Proben (104) umfasst.

9. Vorrichtung (100) nach einem der vorangegangenen Ansprüche, wobei der zweite optische Detektor (110, 112) zum Erfassen zweiter Bilddaten (300) eine Position einnimmt, in der ein Zentrum eines zu untersuchenden Bereichs auf einer optischen Achse des zweiten optischen Detektors (110, 112) liegt.

10. Verfahren (100) zur sequenziellen Mikroskopie einer Vielzahl von Proben (102), welche an einer Vielzahl von Messpositionen angeordnet sind, umfassend:
- Erfassen erster Bilddaten (200) mittels eines ersten optischen Detektors (106, 108), welcher ein erstes Objektiv (106) umfasst und ausgelegt ist, nacheinander die Vielzahl von Messpositionen einzunehmen und an jeder Messposition erste Bilddaten (200) einer Probe mit einer ersten räumlichen Auflösung zu erfassen;
- Festlegen eines zu untersuchenden Bereichs (202) mittels einer Bilddatenauswerteeinrichtung, die ausgelegt ist, für jede Probe (202) einen innerhalb der jeweiligen ersten Bilddaten (200) dargestellten, zu untersuchenden Bereich (204) der Probe (202) festzulegen; und
- Erfassen zweiten Bilddaten (300) mittels eines zweiten optischen Detektors (110, 112), welcher ein zweites Objektiv (110) umfasst und derart an den ersten optischen Detektor (106, 108) gekoppelt ist, dass der zweite optische Detektor (110, 112) dem ersten optischen Detektor (106, 108) nachfolgt, so dass der zweite optische Detektor (110, 112) nacheinander jeweils die Messpositionen einnimmt, die zeitlich vorher der erste optische Detektor (106, 108) eingenommen hatte, während sich der erste optische Detektor bereits an einer weiteren Messposition befindet, und wobei der zweite optische Detektor (110, 112) ausgelegt ist, für jede Probe (202) zweite Bilddaten (300) von dem zu untersuchenden Bereich (204) der jeweiligen Probe (202) mit einer zweiten räumlichen Auflösung zu erfassen, die höher ist als die erste räumliche Auflösung.

## Claims

1. Device for sequential microscopy (100) of a plurality of samples (102) arranged at a plurality of measuring positions, comprising:
- a first optical detector (106, 108) comprising a first objective (106) and designed to successively assume the plurality of measuring positions and to detect first image data (200) of a sample (104) with a first spatial resolution at every measuring position;
- an image data evaluation device, designed to determine for every sample (202) an area (204) of the sample to be examined, illustrated within the respective first image data (200);
- a second optical detector (110, 112), comprising a second objective (110) and being coupled to the first optical detector (106, 108) in such a way that it follows the first optical detector (106, 108) so that the second optical detector (110, 112) successively assumes the plurality of measuring positions, which the first optical detector (106, 108) had assumed earlier in time, while the first optical detector (106, 108) already is situated at another measuring position, and the second optical detector (110, 112) being designed to detect for every sample (202) second image data (300) of the area (204) to be examined of the respective sample (202) with a second spatial resolution which is higher than the first spatial resolution.

2. Device (100) according to one of the preceding claims, wherein the first optical detector (106, 108) and the second optical detector (110, 112) are coupled to each other via a detector mount (116) in such a way that an optical axis of the first optical detector (106, 108) and an optical axis of the second optical detector (110, 112) are arranged in parallel to each other in a fixed distance.

3. Device (100) according to one of the preceding claims, wherein the detector mount (116) is coupled to a coordinate table (114) so that the first and second optical detectors (106, 108; 110, 112) are movable relatively to the plurality of measuring positions (102).

4. Device (100) according to one of the preceding claims, wherein the first optical detector (106, 108) detects first image data (200) based on a given focusing.

5. Device (100) according to one of the preceding claims, wherein the first optical detector (106, 108) has a shorter focal length and/or a larger image filed and/or a higher depth of field and/or a lower image resolution and/or a lower exposure time than the second optical detector (110, 112).

6. Device (100) according to one of the preceding claims, wherein the first optical detector (106, 108) and the second optical detector (110, 112) have a common focal plane.

7. Device (100) according to one of the preceding claims, wherein the first optical detector (106, 108) comprises a webcam and/or a CCD sensor and/or a CMOS sensor and/or a fluorescence detector, and the second optical detector (110, 112) comprises a CCD sensor and/or a CMOS sensor and/or a fluorescence detector.

8. Device (100) according to one of the preceding claims, wherein the device (100) comprises a manipulation device (118) for manipulating samples (104).

9. Device (100) according to one of the preceding claims, wherein the second optical detector (110, 112) assumes a position for detecting second image data (300) in which a center of an area to be examined is located on an optical axis of the second optical detector (110, 112).

10. Method (100) for sequential microscopy of a plurality of samples (102) arranged at a plurality of measuring positions, comprising:
- detecting first image data (200) by means of a first optical detector (106, 108) comprising a first objective (106) and designed to successively assume the plurality of measuring positions and to detect first image data (200) of a sample with a first spatial resolution at every measuring position;
- determining an area (202) to be examined by means of an image data evaluation device designed to determine for every sample (202) an area (204) of the sample to be examined, illustrated within the respective first image data (200); and
- detecting second image data (300) by means of a second optical detector (110, 112), comprising a second objective (110) and being coupled to the first optical detector (106, 108) in such a way that the second optical detector (110, 112) follows the first optical detector (106, 108) so that the second optical detector (110, 112) successively assumes the plurality of measuring positions, which the first optical detector (106, 108) had assumed earlier in time, while the first optical detector (106, 108) already is situated at another measuring position, and the second optical detector (110, 112) being designed to detect for every sample (202) second image data (300) of the area (204) to be examined of the respective sample (202) with a second spatial resolution which is higher than the first spatial resolution.

## Revendications

1. Dispositif de microscopie séquentielle (100) d'une pluralité d'échantillons (102) qui sont disposés à une pluralité de positions de mesure, comprenant :
- un premier détecteur optique (106, 108) qui comprend un premier objectif (106) et est conçu pour prendre l'une après l'autre la pluralité de positions de mesure et pour détecter à chaque position de mesure des premières données d'image (200) d'un échantillon (104) avec une première résolution spatiale ;
- un dispositif d'analyse de données d'image qui est conçu pour déterminer pour chaque échantillon (202) une région (204) de l'échantillon à examiner, représentée au sein des premières données d'image respectives (200) ;
- un second détecteur optique (110, 112) qui comprend un second objectif (110) et est couplé au premier détecteur optique (106, 108) de telle sorte qu'il succède au premier détecteur optique (106, 108) de sorte que le second détecteur optique (110, 112) prend l'une après l'autre la pluralité de positions de mesure que le premier détecteur optique (106, 108) avait prises auparavant dans le temps, tandis que le premier détecteur optique se trouve déjà à une autre position de mesure, et dans lequel le second détecteur optique (110, 112) est conçu pour détecter pour chaque échantillon (202) des secondes données d'image (300) de la région à examiner (204) de l'échantillon respectif (202) avec une seconde résolution spatiale qui est supérieure à la première résolution spatiale.

2. Dispositif (100) selon une des revendications précédentes, dans lequel le premier détecteur optique (106, 108) et le second détecteur optique (110, 112) sont couplés l'un à l'autre par le biais d'un support de détecteur (116) de telle sorte qu'un axe optique du premier détecteur optique (106, 108) et un axe optique du second détecteur optique (110, 112) sont disposés à un écart déterminé parallèlement l'un à l'autre.

3. Dispositif (100) selon une des revendications précédentes, dans lequel le support de détecteur (116) est couplé à une table de coordonnées (114) de sorte que le premier et le second détecteur optique (106, 108 ; 110, 112) peuvent être coulissés par rapport à la pluralité de positions de mesure (102).

4. Dispositif (100) selon une des revendications précédentes, dans lequel le premier détecteur optique (106, 108) détecte des premières données d'image (200) en fonction d'une mise au point prédéfinie.

5. Dispositif (100) selon une des revendications précédentes, dans lequel le premier détecteur optique (106, 108) présente une distance focale plus courte et/ou un champ d'image plus grand et/ou une profondeur de champ supérieure et/ou une résolution d'image plus faible et/ou une durée d'exposition plus faible au second détecteur optique (110, 112).

6. Dispositif (100) selon une des revendications précédentes, dans lequel le premier détecteur optique (106, 108) et le second détecteur optique (110, 112) présentent un plan focal commun.

7. Dispositif (100) selon une des revendications précédentes, dans lequel le premier détecteur optique (106, 108) comprend une Webcam et/ou un capteur CCD et/ou un capteur CMOS et/ou un détecteur de fluorescence, et dans lequel le second détecteur optique (110, 112) comprend un capteur CCD et/ou un capteur CMOS et/ou un détecteur de fluorescence.

8. Dispositif (100) selon une des revendications précédentes, dans lequel le dispositif (100) comprend un dispositif de manipulation (118) pour la manipulation d'échantillons (104).

9. Dispositif (100) selon une des revendications précédentes, dans lequel le second détecteur optique (110, 112) prend une position dans laquelle un centre d'une région à examiner se situe sur un axe optique du second détecteur optique (110, 112) pour la détection de secondes données d'image (300).

10. Procédé (100) de microscopie séquentielle d'une pluralité d'échantillons (102) qui sont disposés à une pluralité de positions de mesure, comprenant :
- détection de premières données d'image (200) au moyen d'un premier détecteur optique (106, 108) qui comprend un premier objectif (106) et est conçu pour prendre l'une après l'autre la pluralité de positions de mesure et pour détecter à chaque position de mesure des premières données d'image (200) d'un échantillon avec une première résolution spatiale ;
- détermination d'une région à examiner (202) au moyen d'un dispositif d'analyse de données d'image qui est conçu pour déterminer pour chaque échantillon (202) une région (204) de l'échantillon (202) à examiner, représentée au sein des premières données d'image respectives (200) ; et
- détection de secondes données d'image (300) au moyen d'un second détecteur optique (110, 112) qui comprend un second objectif (110) et est couplé au premier détecteur optique (106, 108) de telle sorte que le second détecteur optique (110, 112) succède au premier détecteur optique (106, 108) de sorte que le second détecteur optique (110, 112) prend l'une après l'autre à chaque fois les positions de mesure que le premier détecteur optique (106, 108) avait prises auparavant dans le temps, tandis que le premier détecteur optique se trouve déjà à une autre position de mesure, et dans lequel le second détecteur optique (110, 112) est conçu pour détecter pour chaque échantillon (202) des secondes données d'image (300) de la région à examiner (204) de l'échantillon respectif (202) avec une seconde résolution spatiale qui est supérieure à la première résolution spatiale.
